# EUROPÄISCHE PATENTSCHRIFT

(11) **EP 0 193 196 B1**
(45) Veröffentlichungstag und Bekanntmachung des Hinweises auf die Patenterteilung: **14.04.1993**
(21) Anmeldenummer: 86102565.8
(22) Anmeldetag: 27.02.1986
(51) Int. Cl.: H01R 13/56, H01B 17/58

(54) **Elektrisches Gerät mit einer Leitungseinführung**
Electrical device with a cable entry
Dispositif électrique à entrée de câble

(30) Priorität: 01.03.1985 DE 8505827 U
(43) Veröffentlichungstag der Anmeldung: 03.09.1986
(73) Patentinhaber: Brunnquell GmbH Fabrik elektrotechnischer Apparate, D-85057 Ingolstadt (DE)
(72) Erfinder: Baumann, Paul, D-8074 Gaimersheim (DE)
(74) Vertreter: Tergau, Enno, Dipl.-Ing.

(56) Entgegenhaltungen:
- DE-A- 1 665 232
- DE-A- 2 128 482
- DE-A- 3 151 702

## Beschreibung

Die Erfindung betrifft ein elektrisches Gerät mit den Merkmalen des Oberbegriffes des Anspruches 1.

In der Regel weisen die Gehäuse netzspannungsversorgter Elektrogeräte eine Leitungseinführung auf, die für einen wirksamen Knickschutz gegen Brechen der Anschlußleitung an der Einführungsstelle sorgt. Es handelt sich dabei meist um aus elastischem Isolierwerkstoff gefertigte Tüllen oder Biegekorsetts, die als gesonderte Teile am Gerätegehäuse befestigt sind. Ihre Knick- und Bruchschutzwirkung beruht darauf, daß die Anschlußleitung von der Mündungsöffnung des Gehäuses ausgehend nur noch mit großem Radius gebogen werden kann. Nachteiligbei dieser Art Knickschutz wirkt sich die Tatsache aus, daß die Tülle in der Regel als gesondertes Bauteil gefertigt und montiert werden muß. Außerdem muß die Anschlußleitung durch diese Tülle erst hindurchgezogen werden, was die Kontaktierung des Elektrogerätes und dessen Reparatur verkompliziert.

Es sind weiterhin elektrische Geräte mit einer Leitungseinführung als Knickschutz bekannt, bei denen der Mündungsbereich des Gerätegehäuses für die Anschlußleitung etwa trichter- oder trompetenförmig ausgebildet ist. Dadurch wird ebenfalls der Biegeradius der Anschlußleitung an der Austrittsstelle aus dem Gehäuse vergrößert. Ähnlich wie bei den Tüllen hat auch hier die Praxis gezeigt, daß der Knickschutz durch diese Maßnahme verbesserungswürdig ist. Außerdem wirkt die trichterförmige Vertiefung im Gerätegehäuse als Schmutzfänger.

Aus der DE-OS 31 51 702 ist ein elektrischer Stecker mit Kabel-Knickschutz-Einrichtung bekannt, dessen Abdeckkappe eine trompetenförmig ausgebildete Einführungsöffnung für das Kabel aufweist. Diese ist aufgrund einer Einbuchtung an der Seite der Abdeckkappe rechtwinklig zur Einsteckebene in Kabelbreite nicht rotationssymmetrisch. Diese Einbuchtung ermöglicht es, das Anschlußkabel bei Bedarf senkrecht von der Anschlußstelle abzuleiten, wodurch dieser Stecker die Gebrauchsfunktion der bisher geläufigen Normal- und Winkelstecker vereint. Eine Verbesserung der Knick- und Bruchschutzwirkung ergibt sich durch die beschriebene Einbuchtung nicht.

Aufgabe der Erfindung ist es, ein Elektrogerät zu schaffen, das gegenüber den herkömmlichen Geräten verbesserte Knick- und Bruchschutzeigenschaften für die Anschlußleitung aufweist. Diese Aufgabe wird gemäß den kennzeichnenden Merkmalen des Anspruches 1 gelöst.

Die Erfindung geht von der Erkenntnis aus, daß ein metallischer Draht oder eine Litze bei Biegung in einer Biegeebene mit zunehmendem Biegewinkel verstärkt die Neigung zum Brechen zeigt. Insbesondere bricht eine elektrische Leitung bei einer hin- und hergehenden Biegung in einem Punkt um 180° wesentlich eher als bei einer Biegung um 90°. Bei herkömmlichen Knick- und Bruchschutzeinrichtungen wie Tüllen, Biegekorsetts oder Einführungstrompeten wird in der Regel bei einer wechselseitigen Biegung in einer beliebigen Ebene jeweils genau ein Bereich der Anschlußleitung abwechselnd auf Zug bzw. Stauchung beansprucht. Darin liegt die Notwendigkeit aufwendiger Knick- und Bruchschutzeinrichtungen bei Geräten nach dem Stande der Technik begründet.

Der wesentliche Grundgedanke bei der Erfindung besteht in der Maßnahme, die Anlagefläche der Leitungseinführung für die Anschlußleitung so zu formen, daß die Leitung bei Biegungen jeweils in einer Biegeebene durch wechselweise Anlage an zwei diametral gegenüberliegende Bereiche der Anlagefläche zwei in Leitungslängsrichtung versetzte Beigepunkte aufweist. Dies bedeutet, daß eine 180°-Biegung am Freiende der Anschlußleitung - wie sie beispielsweise bei einem nach den Gerätevorschriften geforderten Biegetest fünftausendmal durchgeführt wird - nicht mehr auf einen einheitlichen Bereich, im Extremfall einen Punkt der Anschlußleitung wirkt, sondern sich quasi jeweils eine 90°-Biegung auf zwei unterschiedliche Leitungsbereiche bzw. -punkte verteilt. Durch diese einfache Maßnahme ist eine drastische Erhöhung der Bruchschutzwirkung erreichbar, wobei als entscheidender Faktor der in der Praxis erzielte Abstand der beiden Biegepunkte wirkt. Mit einer Vergrößerung dieses Abstandes wird eine weitergehende Erhöhung der Bruchfestigkeit erzielt, Verbesserungengegenüber dem Stand der Technik um mehr als das Doppelte sind problemlos möglich. Der Erfindungsgegenstand benötigt also keine gesonderten Biegetüllen oder -korsetts als Schutzeinrichtungen gegen Brechen der Anschlußleitung. Dies bedeutet insbesondere, daß auf Bauteile aus einem speziellen, elastischen Werkstoff verzichtet werden kann. Gegenüber herkömmlichen, beispielsweise trichter- oder trompetenartigen Knickschutzeinrichtungen ist beim Erfindungsgegenstand der Bruchschutz weiter verbessert.

Die Kennzeichnungsmerkmale der Ansprüche 2 und 3 beschreiben Formmerkmale für die Anlagefläche der Leitungseinführung, durch die der Erfindungsgrundgedanke auf einfache Weise realisiert wird. Gemäß Anspruch 2 stehen die diametral gegenüberliegenden Randpunkte der Anlagefläche unterschiedlich weit in Leitungslängsrichtung aus dem Gerätegehäuse hervor. Da bei einer Biegung der Biegepunkt in der Regel am Rand der Anlagefläche liegt, werden dadurch also zwei unterschiedliche Biegepunkte erzeugt.

In gleicher Weise wirkt eine verschiedene Ausformung der diametral gegenüberliegenden Flanken der Anlagefläche gemäß Anspruch 3.

Durch das Kennzeichnungsmerkmal des Anspruches 4 wird eine Erhöhung des Biegeradius erzielt, wodurch der Knickschutz weiter verbessert ist.

Erfindungsgegenstände gemäß den kennzeichnenden Merkmalen der Ansprüche 5-13 stellen vorteilhafte Weiterbildungen im Sinne des Erfindungsgrundgedankens dar. Ihre Vorzüge gegenüber Elektrogeräten nach dem Stande der Technik sollen anhand der Figurenbeschreibung näher erläutert werden.

Die Kennzeichnungsmerkmale der Ansprüche 14 und 15 machen klar, daß es für den Ein- bzw. Anbau der Leitungseinführung in ein elektrisches Gerät verschiedene Möglichkeiten gibt. Zum ersten ist eine einstückige Anformung der Leitungseinführung an das Gerätegehäuse denkbar. "Einstückig" kann in diesem Zusammenhang natürlich auch bedeuten, daß bei einem zwei- oder mehrteiligen Gerätegehäuse, bei dem die Teilungsfuge gerade durch den Bereich der Einführungsöffnung verläuft, auch diese selbst zumindest zweiteilig ausgeführt sein kann. Das Kennzeichnungsmerkmal des Anspruches 14 lehrt also im wesentlichen die Integration der Leitungseinführung in die Form des Gerätegehäuses selbst.

Nach dem Kennzeichnungsmerkmal des Anspruches 15 ist die Leitungseinführung als gesondertes Formteil aus Isolierwerkstoff am oder im Gehäuse befestigt. Damit ist ein Einsatz der Leitungseinführung bei elektrischen Geräten mit einem Metallgehäuse möglich.

Im folgenden soll die Erfindung mit ihren Vorteilen gegenüber dem Stand der Technik anhand einiger Ausführungsbeispiele gemäß der beiliegenden Figuren näher erläutert werden. Es zeigen:
- Fig. 1: eine Draufsicht auf die Leitungseinführung eines elektrischen Gerätes gemäß der Ansprüche 5 und 6,
- Fig. 2: eine Seitenansicht in teilweise geschnittener Darstellung aus Pfeilrichtung II analog Fig. 1,
- Fig. 3: eine Seitenansicht in teilweise geschnittener Darstellung aus Pfeilrichtung III analog Fig. 1,
- Fig. 4: eine Draufsicht auf die Leitungseinführung eines elektrischen Gerätes gemäß der Ansprüche 7-10,
- Fig. 5: eine Seitenansicht aus Pfeilrichtung V analog Fig. 4,
- Fig. 6: eine Seitenansicht aus Pfeilrichtung VI analog Fig. 4,
- Fig. 7: eine Draufsicht auf die Leitungseinführung eines elektrischen Gerätes gemäß der Ansprüche 11 und 12,
- Fig. 8: eine Seitenansicht in teilweise geschnittener Darstellung aus Pfeilrichtung VIII analog Fig. 7,
- Fig. 9: eine Seitenansicht in teilweise geschnittener Darstellung aus Pfeilrichtung IX analog Fig. 7,
- Fig. 10: eine Draufsicht auf die Leitungseinführung eines elektrischen Gerätes gemäß Anspruch 13,
- Fig. 11: eine Seitenansicht in teilweise geschnittener Darstellung gemäß Pfeilrichtung XI analog Fig. 10 und
- Fig. 12: eine Seitenansicht in teilweise geschnittener Darstellung aus Pfeilrichtung XII analog Fig. 10.

Der Erfindungsgegenstand enthält an einer beliebigen Stelle seines Gerätegehäuses 1 eine Leitungseinführung 2, deren Formgebung einen besonders wirksamen Knickschutz für die Anschlußleitung 3 gewährleistet.

Die Anschlußleitung 3 mündet von außen her durch eine Einführungsöffnung 4 in das Gehäuseinnere 5. Der von der Einführungsöffnung 4 nach außen weisende Teil der Leitungseinführung 2 wird durch die Anlageflächen 6 gebildet, die um die Anschlußleitung 3 herum verlaufen. Ganz allgemein sind die Anlageflächen 6 bezüglich einer Drehung um die Leitungsachse 7 nicht rotationssymmetrisch geformt. Es ist darauf hinzuweisen, daß unter Leitungsachse 7 die zentrale Ader der Anschlußleitung 3 in nicht gebogenem Zustand gemeint sein soll.

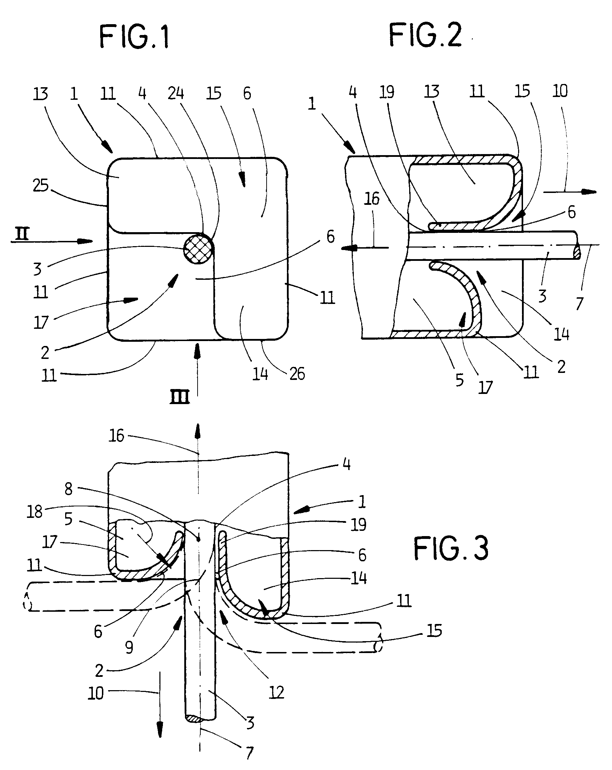

Die Anlageflächen 6 sind bei allen Ausführungsbeispielen so geformt, daß sie die Anschlußleitung 3 bei Biegungen jeweils in einer Beigeebene durch wechselweise Anlage an zwei diametral gegenüberliegende Bereiche der Anlageflächen 6 jeweils zwei verschiedene Biegepunkte 8,9 bezogen auf die Leitungslängsrichtung 10 aufweist. Die genannten Biegungen sind in den Fig. 3,6,9 und 12 gestrichelt dargestellt. Die Biegeebene fällt mit der Zeichnungsebene zusammen. Unter Biegepunkt soll der vom Gehäuseinnern 5 aus gesehen erste von der Leitungsachse 7 seitlich abweichende Punkt der zentralen Leitungsader verstanden werden.

Gemäß den Fig. 1-6 stehen diametral gegenüberliegende Randpunkte 11 der Anlagefläche 6 unterschiedlich weit in Leitungslängsrichtung 10 aus dem Gerätegehäuse 1 hervor. Dadurch ergeben sich bei einer Biegung der Anschlußleitung 3 je nach Biegerichtung zwei unterschiedliche Biegepunkte 8 und 9. Dadurch ist gewährleistet, daß beispielsweise im Biegepunkt 8 die Anschlußleitung jeweils nur um 90° gebogen wird, die restliche 90°-Biegung zur anderen Seite hin findet im zweiten Biegepunkt 9 statt. Dies gilt für eine beliebige Biegeebene. Dadurch ist gewährleistet, daß die Anschlußleitung 3 wirksamer als bei Knick- und Bruchschutzeinrichtungen der herkömmlichen Art gegen Brechen geschützt ist. Der von der Anlagefläche 6 umgrenzte Biegefreiraum 12 für die Anschlußleitung 3 erweitert sich in Leitungslängsrichtung 10 nach außen hin. Dadurch ist eine zusätzliche Bewegungsfreiheit für die Anschlußleitung 3 gewährleistet. In den Fig. 1-3 ist ein Ausführungsbeispiel des Erfindungsgegenstandes dargestellt, bei dem die Anlagefläche 6 durch die Schenkel 13, 14 eines L-förmigen, zu seinem Rand hin konvex gekrümmten Vorsprunges 15 und einer zwischen diesen L-Schenkeln 13, 14 liegenden, ebenfalls konvex gekrümmten, in Einführungsrichtung 16 zurückversetzten Verbindungsflanke 17 gebildet ist (Fig. 1). Durch die konvexe Krümmung der Anlagefläche 6 (Fig. 2 und 3) wird der absolute Biegeradius 18 durch die formschlüssige Anlage der Anschlußleitung 3 an die Krümmung vorteilhaft vergrößert. Dies bringt eine weitere Schonung der Leitung mit sich. Der innenliegende Flankenbereich 19 des Vorsprunges 15 ist gerade ausgebildet und liegt der Verbindungsflanke 17 gegenüber. Durch diese Maßnahme sind die Biegepunkte 8 und 9 entsprechend weit auseinandergerückt, wodurch die Knickschutzwirkung der Leitungseinführung 2 weiter verbessert wird.

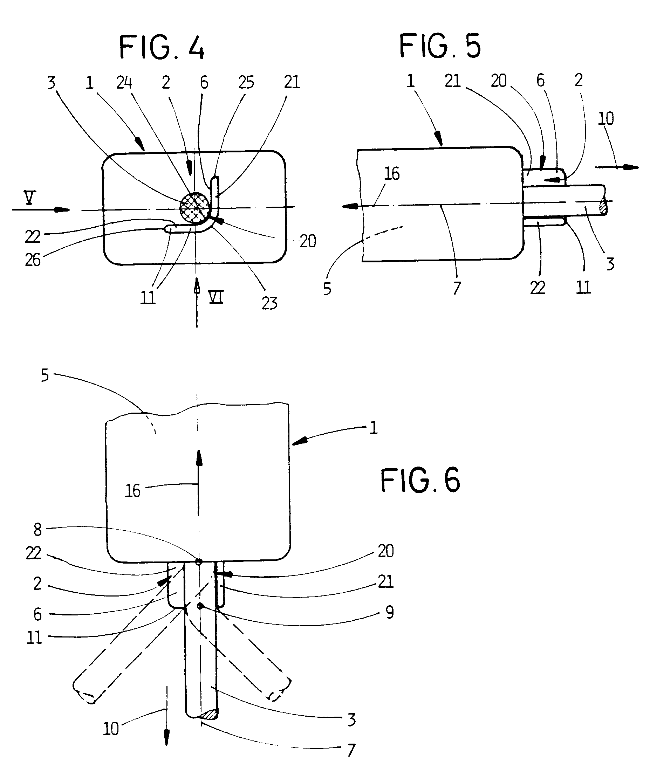

Eine besonders einfache Realisierung des Erfindungsgedankens ist in den Fig. 4-6 dargestellt. Dort wird die Anlagefläche 6 durch einen Teil des Randes der Einführungsöffnung 4 und einen gegenüberliegenden L-förmigen, parallel zur Einführungsrichtung 16 aus dem Gerätegehäuse 1 hervorstehenden Formkörper 20 gebildet, zwischen dessen Schenkel 21,22 die Anschlußleitung 3 einliegt. Der Übergangsbereich 23 des Formkörpers 20 zwischen den beiden L-Schenkeln 21,22 ist mit einer Innenrundung 24 entsprechend dem Durchmesser der Anschlußleitung versehen. Dies kommt einer sauberen Führung der Anschlußleitung 3 ebenso zugute, wie die Lage des Querschnitts der Anschlußleitung 3 innerhalb eines gedachten, aus den L-Schenkeln 21,22 und der Verbindungslinie der Freienden 25,26 gebildeten Dreiecks.

Dies gilt analog für das Ausführungsbeispiel gemäß Fig. 1-3. Eine besonders stabile Ausführung für die Anlagefläche 6 wird durch eine massive Ausbildung des Formkörpers 20 aus Isolierwerkstoff erreicht.

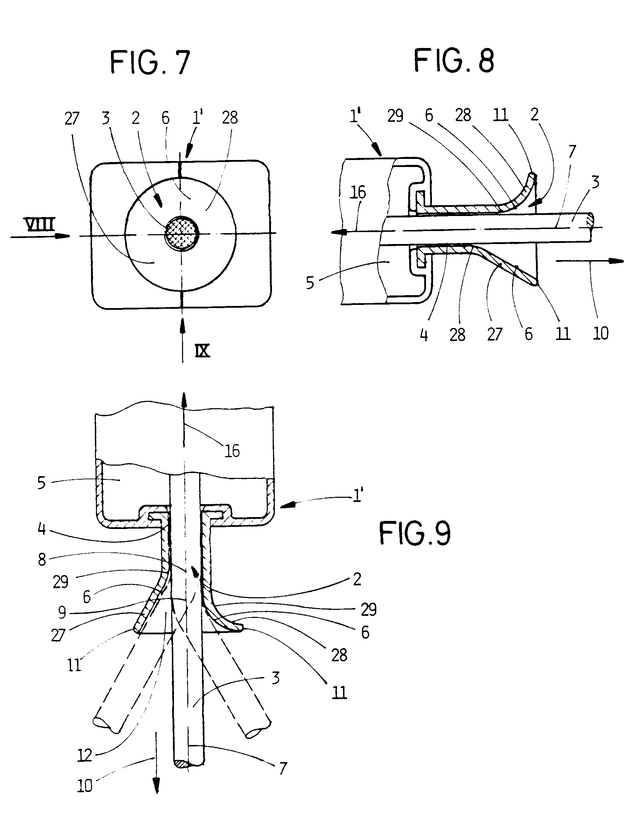

Alternative Ausführungsbeispiele sind in den Fig. 7-12 dargestellt. Dort werden die zwei Biegepunkte 8,9 nicht durch unterschiedlich weit hervorstehende Randpunkte 11 der Anlagefläche 6 erzielt, sondern durch eine unterschiedliche Formgebung diametral gegenüberliegender Bereiche der Anlagefläche 6.

Gemäß den Fig. 7-9 ist beispielsweise eine Flanke der Anlagefläche als Geradflanke 27 ausgebildet, während die gegenüberliegende Rundflanke 28 konvex gekrümmt ist. Dadurch ergibt sich zu beiden Biegeendstellungen ein unterschiedliches Biegeverhalten der Anschlußleitung 3 mit unterschiedlichen Biegepunkten 8,9, wodurch wiederum die Knickschutzwirkung begründet ist. Weiterhin soll dieses Ausführungsbeispiel erläutern, daß die Leitungseinführung 2 als gesondertes Formstück ausgebildet sein kann. Dadurch kann die Erfindung auch bei elektrischen Geräten mit Metallgehäusen verwirklicht werden, da die Gerätevorschriften hier Leitungseiführungen aus Isolierwerkstoff verlangen. Die gegenüberliegenden, inneren Randpunkte 29 der Geradflanke 27 bzw. Rundflanke 28 liegen bezüglich der Leitungslängsrichtung 10 an verschiedenen Leitungspunkten. Durch die Variation der jeweiligen Lage dieser Randpunkte 29 zueinander kann die Knick- und Bruchschutzwirkung den praxisgerechten Anforderungen angepaßt werden, wie dies auch bei den übrigen Ausführungsbeispielen möglich ist.

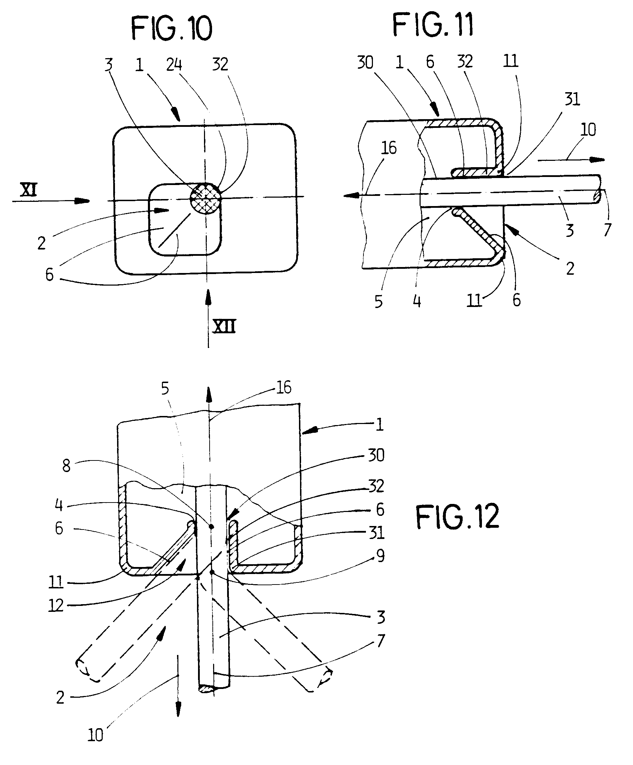

Beim Ausführungsbeispiel gemäß den Fig. 10-12 weist der Biegefreiraum 12 im wesentlichen die Form einer auf dem Kopf stehenden, vierseitigen Pyramide auf, deren Spitze 30 senkrecht über dem Eckpunkt 31 der Grundfläche liegt. Die Anschlußleitung 3 verläuft in der die Spitze 30 mit dem Eckpunkt 31 verbindenden Kante 32. Durch diese Formgebung werden ebenfalls (siehe Fig. 12) zwei verschiedene Biegepunkte 8,9 mit der damit verbundenen Bruchschutzwirkung erzielt.

Die gezeigten Ausführungsbeispiele sollen einen Überblick über die mannigfaltigen Möglichkeiten geben, die den Erfindungsgedanken in der Praxis realisieren können. Demzufolge sind auch viele weitere Formgebungen denkbar, die das beschriebene Knick- und Bruchschutzprinzip ausnützen.

| Bezugszeichenliste | |
|---|---|
| 1 | Gerätegehäuse |
| 2 | Leitungseinführung |
| 3 | Anschlußleitung |
| 4 | Einführungsöffnung |
| 5 | Gehäuseinneres |
| 6 | Anlagefläche |
| 7 | Leitungsachse |
| 8 | Biegepunkt |
| 9 | " |
| 10 | Leitungslängsrichtung |
| 11 | Randpunkt (außen) |
| 12 | Biegefreiraum |
| 13 | Schenkel |
| 14 | " |
| 15 | Vorsprung |
| 16 | Einführungsrichtung |
| 17 | Verbindungsflanke |
| 18 | Biegeradius |
| 19 | innenliegender Flankenbereich |
| 20 | Formkörper |
| 21 | Schenkel |
| 22 | " |
| 23 | Übergangsbereich |
| 24 | Innenrundung |
| 25 | Freiende |
| 26 | " |
| 27 | Geradflanke |
| 28 | Rundflanke |
| 29 | Randpunkt (innen) |
| 30 | Spitze |
| 31 | Eckpunkt |
| 32 | Kante |

## Patentansprüche

1. Elektrisches Gerät mit einer durch eine Leitungseinführung (2) in das Gerätegehäuse (1) mündenden Anschlußleitung (3), bei dem die um die Anschlußleitung (3) verlaufende Anlagefläche (6) der Leitungseinführung (2) bezüglich einer Drehung um die Leitungsachse (7) nicht rotationssymmetrisch geformt ist,
gekennzeichnet durch
eine Formgebung der Anlagefläche (6) derart, daß die Anschlußleitung (3) bei Biegungen jeweils in einer Biegeebene durch wechselweise Anlage an zwei diametral gegenüberliegende Bereiche der Anlagefläche (6) zwei verschiedene Biegepunkte (8,9) bezogen auf die Leitungslängsrichtung (10) aufweist.

2. Elektrisches Gerät nach Anspruch 1,
dadurch gekennzeichnet,
daß jeweils diametral gegenüberliegende Randpunkte (11) der Anlagefläche (6) unterschiedlich weit in Leitungslängsrichtung (10) aus dem Gerätegehäuse (1) vorstehen.

3. Elektrisches Gerät nach Anspruch 1 oder 2,
dadurch gekennzeichnet,
daß jeweils diametral gegenüberliegende Flanken der Anlagefläche (6) verschieden geformt sind.

4. Elektrisches Gerät nach einem der vorgenannten Ansprüche,
dadurch gekennzeichnet,
daß sich der von der Anlagefläche (6) umgrenzte Biegefreiraum (12) der Anschlußleitung (3) in Leitungslängsrichtung (10) nach außen erweitert.

5. Elektrisches Gerät nach Anspruch 4,
dadurch gekennzeichnet,
daß die Anlagefläche (6) durch
- die Schenkel (13,14) eines in Draufsicht L-förmigen, zu seinem Rand hin konvex gekrümmten Vorsprunges (15) und
- einer zwischen dessen L-Schenkeln (13,14) liegenden, ebenfalls konvex gekrümmten, in Einführungsrichtung (16) zurückversetzten Verbindungsflanke (17) gebildet ist.

6. Elektrisches Gerät nach Anspruch 5,
dadurch gekennzeichnet,
daß der innenliegende Flankenbereich (19 ) des Vorsprunges (15) einen der Verbindungsflanke (17) gegenüberliegenden, in Einführungsrichtung (16) verlaufenden, geraden Abschnitt der Anlagefläche (6) bildet.

7. Elektrisches Gerät nach einem der Ansprüche 1 bis 3,
dadurch gekennzeichnet,
daß die Anlagefläche (6) durch einen L-förmigen, in Leitungslängsrichtung (10) aus dem Gerätegehäuse (1) hervorstehenden Formkörper (20) gebildet ist, zwischen dessen Schenkeln (21,22) die Anschlußleitung (3) verläuft.

8. Elektrisches Gerät nach einem der Ansprüche 5 bis 7, dadurch gekennzeichnet,
daß der Übergangsbereich (23) des Formkörpers (20) bzw. des Vorsprunges (15) zwischen den beiden L-Schenkeln (21,22 bzw. 13,14) mit einer Innenrundung (24) entsprechend dem Durchmesser der Anschlußleitung (3) versehen ist.

9. Elektrisches Gerät nach Anspruch 8,
dadurch gekennzeichnet,
daß der Querschnitt der Anschlußleitung (3) innerhalb eines gedachten, aus den L-Schenkeln (13,14 bzw. 21,22) und der Verbindungslinie derer Freienden gebildeten Dreiecks liegt.

10. Elektrisches Gerät nach einem der Ansprüche 7 bis 9,
dadurch gekennzeichnet,
daß der Formkörper (20) massiv aus Isolierwerkstoff gebildet ist.

11. Elektrisches Gerät nach einem der Ansprüche 1 bis 4,
dadurch gekennzeichnet,
daß die Anlagefläche (6) in eine
- Geradflanke (27) und
- eine gegenüberliegende, konvex gekrümmte Rundflanke (28) geteilt ist.

12. Elektrisches Gerät nach Anspruch 11,
dadurch gekennzeichnet,
daß die gegenüberliegenden, inneren Randpunkte (29) der Geradflanke (27) bzw. der Rundflanke (28) bezüglich der Leitungslängsrichtung (10) an verschiedenen Leitungspunkten liegen.

13. Elektrisches Gerät nach Anspruch 3 oder 4,
dadurch gekennzeichnet,
daß der Biegefreiraum (12) im wesentlichen die Form einer auf dem Kopf stehenden, vierseitigen Pyramide aufweist, bei der die die Einführungsöffnung (4) enthaltende Spitze (30) senkrecht über einem Eckpunkt (31) der Pyramidengrundfläche liegt und die Anschlußleitung (3) in der die Spitze (30) und diesen Eckpunkt (31) verbindenden Kante (32) verläuft.

14. Elektrisches Gerät nach einem der vorgenannten Ansprüche,
dadurch gekennzeichnet,
daß die Leitungseinführung (3) einstückig an das Gerätegehäuse (1) angeformt ist.

15. Elektrisches Gerät insbesondere mit einem Metallgehäuse (1') nach einem der Ansprüche 1-13,
dadurch gekennzeichnet,
daß die Leitungseinführung (3) als gesondertes Formteil aus Isolierwerkstoff am oder im Gehäuse (1') befestigt ist.

## Claims

1. Electrical apparatus with a connection cable (3) entering through a cable entry (2) into the case (1) of the apparatus, on which the bearing surface (6) of the cable entry (2), which extends around the connection cable (3), has a rotationally unsymmetrical shape with regard to rotation around the axis (7) of the cable,
characterized in that
the bearing surface (6) is formed in such a way that the connection cable (3), when being bent in a bending plane, shows two different bending points (8, 9), referred to the longitudinal direction (10) of the cable, due to alternate bearing against two diametrically opposite areas of the bearing surface (6).

2. Electrical apparatus according to claim 1,
characterized in that
diametrically opposite points (11) of the edge of the bearing surface (6) protrude by different lengths beyond the case (1), in longitudinal direction (10) of the cable.

3. Electrical apparatus according to claim 1 or 2,
characterized in that
diametrically opposite flanks of the bearing surface (6) are differently shaped.

4. Electrical apparatus according to any of the preceding claims,
characterized in that
the bending clearance (12) of the connection cable (3), which is defined by the bearing surface (6), enlarges outwardly in longitudinal direction (10) of the cable.

5. Electrical apparatus according to claim 4,
characterized in that
the bearing surface (6) is formed
- by the legs (13, 14) of a projection (15) which, when seen from top, has the shape of an L, and has a convex curvature towards its edge, as well as
- by a connection flank (17) situated between the legs (13, 14) of the L of the projection, which has also a convex curvature and is offset to the back, in the direction of insertion (16) of the cable.

6. Electrical apparatus according to claim 5,
characterized in that
the inner flank area (19) of the projection (15) constitutes a straight portion of the bearing surface (6), which is opposite to the connection flank (17) and extends in the direction of insertion (16).

7. Electrical apparatus according to any of claims 1 to 3,
characterized in that
the bearing surface (6) is formed by an L-shaped piece (20) which protrudes beyond the case (1) in longitudinal direction (10) of the connection cable (3), the latter passing between the legs (21, 22) of that shaped piece.

8. Electrical apparatus according to any of claims 5 to 7,
characterized in that
the transition area (23) of the shaped piece (20) or of the projection (15), between the two legs (21, 22 or 13, 14, respectively) of the L, is provided with an internal curvature (24) corresponding to the diameter of the connection cable (3).

9. Electrical apparatus according to claim 8,
characterized in that
the cross section of the connection cable (3) lies within an imaginary triangle formed by the legs (13, 14 or 21, 22, respectively) of the L and the line connecting the free ends of these legs.

10. Electrical apparatus according to any of claims 7 to 9,
characterized in that
the shaped piece (20) is solid and made of insulating material.

11. Electrical apparatus according to any of claims 1 to 4,
characterized in that
the bearing surface (6) is partitioned into
- a straight flank (27) and
- a round flank (28) of convex curvature, situated opposite of it.

12. Electrical apparatus according to claim 11,
characterized in that
the points (29) situated opposite to each other on the inner edge of the straight flank (27) and the round flank (28), respectively, are situated on different points of the cable in longitudinal direction (10) of the cable.

13. Electrical apparatus according to claim 3 or 4,
characterized in that
the bending clearance (12) has substantially the shape of an inverted square pyramid whose summit (30), containing the entry opening (4), is situated vertically above an angle point (31) of the pyramid base and the connection cable (3) extends along the edge (32) running from the summit (30) to that angle point (31).

14. Electrical apparatus according to any of the precedent claims,
characterized in that
the cable entry (2) is integrally mounted on the case (1) of the apparatus.

15. Electrical apparatus according to any of claims 1 to 13, having in particular a metal case (1'),
characterized in that
the cable entry (2) is a separate shaped piece, made of insulating material, which is fastened on or in the case (1').

## Revendications

1. Appareil électrique avec un câble de raccordement (3), ou une autre canalisation de raccordement, pénétrant à travers une entrée (2) de câble ou autre canalisation dans le boîtier (1) de l'appareil, sur lequel la surface d'application (6) de l'entrée de câble (2), s'étendant autour du câble de raccordement (3), n'est pas conformée à symétrie de révolution pour une rotation autour de l'axe (7) du câble,
caractérisé en ce que la surface d'application (6) est conformée de manière que le câble de raccordement (3), s'il est fléchi dans un plan de pliage, par applications alternées contre deux zones diamétralement opposées de la surface d'application (6), présente deux points de flexion (8, 9) différents rapportés à la direction longitudinale (10) du câble.

2. Appareil selon la revendication 1, caractérisé en ce que des points (11) diamétralement opposés du bord de la surface d'application (6) font saillie du boîtier (1) sur des distances différentes dans la direction longitudinale (10) du câble.

3. Appareil selon la revendication 1 ou 2, caractérisé en ce que des flancs diamétralement opposés de la surface d'application (6) sont conformés différemment.

4. Appareil selon une des revendications précédentes, Caractérisé en ce que l'espace de pliage libre (12) du câble de raccordement (3), espace qui est délimité par la surface d'application (6), s'élargit vers l'extérieur dans la direction longitudinale (10) du câble.

5. Appareil selon la revendication 4, caractérisé en ce que la surface d'application (6) est formée par des branches (13, 14) d'une saillie (15) ayant une forme en L, vue en plan, et possédant une courbure convexe vers son bord, ainsi que par un flanc de liaison (17) situé entre les branches (13, 14) du L de la saillie, flanc qui possède également une courbure convexe et est décalé en arrière dans la direction d'introduction (16) du câble.

6. Appareil selon la revendication 5, caractérisé en ce que la zone de flanc intérieure (19) de la saillie (15) forme une portion droite de la surface d'application (6), qui est située en face du flanc de liaison (17) et s'étend dans la direction d'introduction (16).

7. Appareil selon une des revendications 1 à 3, caractérisé en ce que la surface d'application (6) est formée par une pièce moulée ou façonnée (20), de forme en L, qui fait saillie du boîtier (1) dans la direction longitudinale (10) du câble (3), lequel passe entre les branches (21, 22) de cette pièce.

8. Appareil selon une des revendications 5 à 7, caractérisé en ce que la zone de transition (23) de la pièce moulée (20) ou de la saillie (15), entre les deux branches (21, 22 respectivement 13, 14) du L, est pourvue d'un arrondi intérieur (24) correspondant au diamètre du câble de raccordement (3).

9. Appareil selon la revendication 8, caractérisé en ce que la section droite du câble de raccordement (3) est située dans un triangle fictif formé par les branches (13, 14 respectivement 21, 22) du L et la ligne reliant les extrémités libres de ces branches.

10. Appareil selon une des revendications 7 à 9, caractérisé en ce que la pièce moulée (20) est une pièce massive en matériau isolant.

11. Appareil selon une des revendications 1 à 4, caractérisé en ce que la surface d'application (6) est partagée en un flanc droit (27) et un flanc courbe (28) situé en face de lui et de profil convexe.

12. Appareil selon la revendication 11, caractérisé en ce que les points (29) situés les uns en face des autres sur le bord antérieur du flanc droit (27) respectivement du flanc courbe (28) sont situés à des points différents du câble dans le sens de la direction longitudinale (10) du câble.

13. Appareil selon la revendication 3 ou 4, caractérisé en ce que l'espace de pliage libre (12) affecte essentiellement la forme d'une pyramide quadrilatérale inversée, l'orifice d'entrée (4), contenant le sommet (30), étant situé au-dessus d'un angle (31) de la base de la pyramide et le câble (3) s'étendant suivant l'arête (32) reliant le sommet (30) à cet angle (31).

14. Appareil selon une des revendications précédentes, caractérisé en ce que l'entrée de câble (2) est formée d'un seul tenant avec le boîtier (1) de l'appareil.

15. Appareil selon une des revendications 1 à 13, comportant en particulier un boîtier (1') en métal, caractérisé en ce que l'entrée de câble (2) est constituée par une pièce séparée, moulée ou façonnée, en matériau isolant, qui est fixée sur ou dans le boîtier (1').
